# EUROPEAN PATENT APPLICATION

(11) **EP 4 635 663 A1**
(43) Date of publication of application: **22.10.2025**
(21) Application number: 24172177.8
(22) Date of filing: 24.04.2024
(51) Int. Cl.: B23D 61/02, B24D 5/12, B23D 65/00

(54) **TOOL INSERT FOR CUTTING OR GRINDING APPLICATIONS**

(30) Priority: 16.04.2024 EP 24170638
(71) Applicant: Hilti Aktiengesellschaft, 9494 Schaan (LI)
(72) Inventor: Kumar, Manish, 9486 Schaanwald (LI); Bartholomee, Ward, 89231 Neu-Ulm (DE); Hoop, Matthaeus, 9492 Eschen (LI); Granitzer, Thomas, 89278 Nersingen (DE)
(74) Representative: Hilti Aktiengesellschaft Corporate Intellectual Property

(57) **Abstract**

A tool insert (50) configured to be connected to a power tool, comprising: a metal ring (51), a plurality of cutting or grinding elements (52) connected to the metal ring (51), and inner structure (53) including an arbor hole (54) configured to be connected to the power tool, wherein the inner structure (53) is made from a plastic material and the metal ring (51) is connected to the inner structure (53).

## Description

### Technical field

The present invention relates to a tool insert for cutting or grinding applications configured to be connected to a power tool according to the definition of claim 1.

### Background of the invention

WO 2021/204765 A1 discloses a tool insert for cutting applications that is configured to be connected to a power tool. The tool insert is formed as cutting disk and comprises a metal ring, a plurality of cutting elements connected to the metal ring, and an arbor hole configured to be connected to the power tool. To reduce the weight of the cutting disk, panels have been removed from the metal ring to leave apertures which extend through the thickness of the metal ring. The pattern of these apertures maintains structural strength whilst reducing the weight of the whole cutting disk.

To support health and safety, an operator should be protected from the effects of noise and/or vibration caused by power tools and tool inserts for cutting applications. Noise information and vibration values can be measured in accordance with a standardized test in accordance with EN 60745-1:2009 and EN 60745-2-22:2011. There is a need for tool inserts for cutting applications having a reduced noise level compared to the tool inserts known from WO 2021/204765 A1.

EP 0 865 878 A1 discloses a tool insert for grinding applications that is configured to be connected to a power tool. The tool insert comprises a metal ring, a plurality of grinding elements connected to the metal ring, and an inner structure including an arbor hole configured to be connected to the power tool.

To support health and safety, an operator should be protected from the effects of noise and/or vibration caused by power tools and tool inserts for grinding applications. Noise information and vibration values can be measured in accordance with a standardized test in accordance with EN 62841. There is a need for tool inserts for grinding applications having a reduced noise level compared to the tool inserts known from EP 0 865 878 A1.

### Summary of the invention

The present invention has been made with the above-described background in mind, and it is, therefore, an object of the present invention to provide a tool insert for cutting or grinding applications with a reduced noise level during operation (cutting or grinding).

These objectives are achieved by realizing the features of the independent claims. Features which further develop the invention in an advantageous manner are described in the dependent claims.

According to an aspect of the invention, there is provided tool insert for cutting or grinding applications comprising a metal ring, a plurality of cutting or grinding elements connected to the metal ring, and an inner structure including an arbor hole configured to be connected to the power tool, characterized in that the inner structure is made from a plastic material and the metal ring is connected to the inner structure.

Using an inner structure made of a plastic material allows to reduce the noise level caused by tool inserts according to the present invention. Furthermore, the weight of the tool inserts is reduced. By integrating the arbor hole in the inner structure made of a plastic material, the noise level caused by the contact of the arbor hole and the spindle of the power tool is reduced because the spindle is typically made from steel and a combination of plastic and metal creates less noise than the combination of metal and metal.

The inner structure can be made from any type of plastic material. The plastic material will be adapted to the application of the tool insert and the specific requirements. Due to their well-known properties, plastic materials made of polyamides (PA), particularly made of fiber-reinforced polyamides, are preferred to be used for the inner structure. The form of the tool insert will be adapted to the application of the tool insert and the specific requirements.

The concept of the hybrid tool insert for cutting or grinding applications according to the present invention can be used in combination with any metal ring, any arbor hole, any type of cutting or grinding element, and any type of connection between the cutting or grinding element and the metal ring.

In a preferred version, the metal ring includes one or more interlocking elements. The interlocking elements allow a strong connection between the inner structure and the metal ring. The interlocking elements can be formed as clearance holes and/or as blind holes compared to the metal ring. The form and the pattern of the interlocking elements will be adapted to the application of the tool insert and the specific requirements.

For tool inserts for cutting or grinding applications, the inner structure can have a disc-shaped inner structure including an outer circumference, an inner circumference, and a first and second end face. For tool inserts for cutting applications, the cutting elements are equi-angularly arranged along the outer circumference and connected to the metal ring. For tool inserts for grinding applications, the grinding elements are connected to one of the end faces of the metal ring.

In a preferred version, the metal ring includes a border strip having a thickness smaller than the thickness of the metal ring. A border strip, which has a thickness smaller than the thickness of the metal ring, allows to connect the inner structure without any protrusion of the plastic material with respect to the metal ring. If the plastic material would protrude with respect to the metal ring, the plastic material would be abraded during cutting as long as the plastic material fits with the width of the cutting elements.

Preferably, the border strip includes one or more interlocking elements. The interlocking elements in the border strip allow a strong connection between the inner structure made from plastic material and the metal ring. The form and the pattern of the interlocking elements will be adapted to the application of the tool insert and the specific requirements. The interlocking elements can be formed as clearance holes having the same thickness as the border strip and/or as blind holes having a reduced thickness compared to the border strip.

Preferably, the interlocking elements include first interlocking elements formed as clearance holes and/or second interlocking elements formed as blind holes. The form and the pattern of the first interlocking elements and/or the second interlocking elements will be adapted to the application of the tool insert and the specific requirements. Clearance holes have the same thickness as the metal ring or the border strip, and blind holes have a reduced thickness compared to the metal ring. The form and the pattern of the first interlocking elements and/or second interlocking elements will be adapted to the application of the tool insert and the specific requirements.

For tool inserts for cutting applications, interlocking elements formed as clearance holes are preferred. Since the cutting elements are arranged at the outer circumference of the metal ring, there is no risk of a critical heat impact during plastic working at the inner circumference of the metal ring. Clearance holes allow a strong connection between the inner structure and the metal ring.

For tool inserts for grinding applications, first interlocking elements formed as clearance holes arranged near the inner circumference and second interlocking elements formed as blind holes arranged opposite to the grinding elements are preferred.

In a preferred version, the inner structure is made from polyamides. Using polyamides to build the inner structure allows to reduce the weight of the tool inserts according to the present invention. Polyamides have high strength and stiffness, excellent impact resistance and good abrasion and wear resistance. Due to their properties, polyamides are qualified to build the inner structure and to connect the inner structure with the metal ring.

Preferably, the inner structure is made from fiber-reinforced polyamides. Using fiber-reinforced polyamides to build the inner structure allows to reduce the weight of the tool inserts according to the present invention. By reinforcing polyamides with fibers, properties of the polyamides, such as strength, elastic modulus, and continuous operating temperature, can increase. Due to their properties, fiber-reinforced polyamides are qualified to build the inner structure and to connect the inner structure with the metal ring.

In a preferred version, the inner structure is connected to the metal ring via over-molding or potting. Connecting the inner structure to the metal ring via over-molding or potting allows to create a strong connection between the inner structure and the metal ring. Preferably, the inner structure and the connection of the inner structure to the metal ring can be manufactured via injection molding.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIGS. 1A, B: show a power tool formed as cut-off saw that is connected to a tool insert for cutting in a connected state (FIG. 1A) and in an unconnected state (FIG. 1B) of the tool insert,
- FIGS. 2A, B: show a power tool formed as grinder that is connected to a tool insert for grinding in a connected state (FIG. 2A) and in an unconnected state (FIG. 2B) of the tool insert,
- FIGS. 3A, B: show a first embodiment of a tool insert according to the present invention, the tool insert being provided for cutting applications and including a metal ring, a plurality of cutting elements, and an inner structure formed as plane plastic part,
- FIG. 4: shows in detail the tool insert of FIG. 3B in a cross-section, the metal ring being encased at its inner circumference by a border strip that includes an inter-locking element arranged in the border strip,
- FIGS. 5A, B: show a second embodiment of a tool insert according to the present invention, the tool insert being provided for grinding applications and including a metal ring, a plurality of grinding elements, and an inner structure formed as cup-shaped plastic part,
- FIGS. 6A, B: show the metal ring and the grinding elements of the tool insert of FIG. 5, and
- FIGS. 7A, B: show a third embodiment of a tool insert according to the present invention, the tool insert being provided for cutting applications and including a metal ring, a plurality of cutting elements, and an inner structure formed as plane plastic part.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

The term "power tool" refers to mains-operated (corded) power tools, battery-operated (cordless) power tools, and any other type of power tools, such as gas- or petrol-driven power tools, and the term "tool insert" refers to all types of tool inserts that are configured to be connected to a power tool.

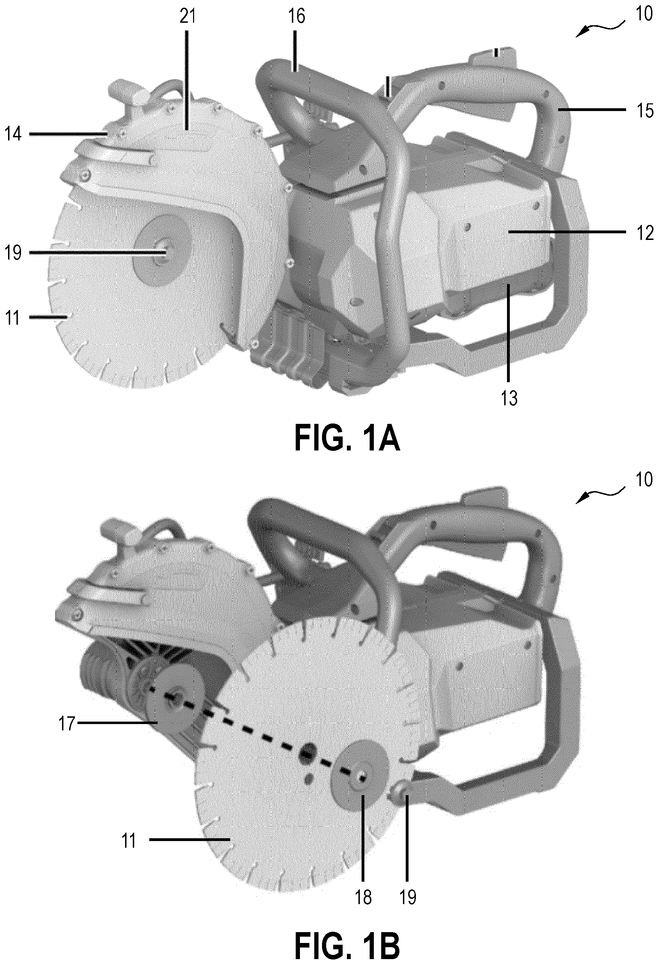

**FIGS. 1A****, B** show a power tool **10** and a tool insert **11** that is connected to the power tool 10. The power tool 10 is a handheld cordless cut-off saw that is designed for cutting applications (indoor and outdoor, wet and dry) of mineral or metallic construction materials and asphalt with abrasive cut-off wheels or diamond cut-off wheels.

The tool insert is provided as tool insert for cutting applications and formed as cutting disk. Tool inserts for cutting applications include all disk-shaped tool inserts designed for cutting applications, such as diamond cut-off wheels in accordance with EN 13236, abrasive cut-off wheels, and bonded reinforced cut-off wheels in accordance with ISO 603-15 and ISO 603-16.

The cut-off saw 10 comprises a motor housing **12** with an electric motor (not shown), a battery pack **13,** and a guard **14.** The cutting disk 11 is surrounded by the guard 14, which serves to protect the operator from flying dust particles and reduces the risk of injury posed by the operator reaching into the rotating cutting disk 11. For operating the cut-off saw 10, the cut-off saw 10 must be hold securely with both hands on the defined grips, a main grip **15** and a front grip **16.**

FIG. 1A shows the cut-off saw 10 with the cutting disk 11 connected to the power tool, and FIG. 1B shows in detail how the cutting disk 11 can be connected to the cut-off saw 10. The cutting disk 11 is connected to the cut-off saw 10 via a mounting flange **17,** a clamping flange **18,** and a securing screw **19.** The cutting disk 11 is positioned flush and centered on the mounting flange 17, wherein the direction of rotation of the cutting disk 11 must match a direction-of-rotation arrow **21.** The clamping flange 18 is positioned flush and centered and the securing screw 19 is installed with an assembly tool.

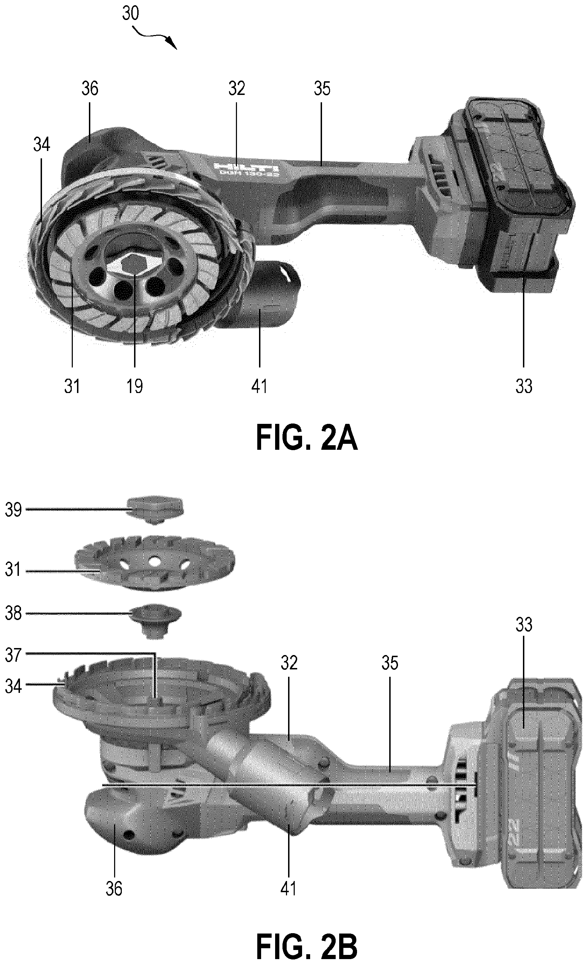

**FIGS. 2A****, B** show a power tool **30** and a tool insert **31** that is connected to the power tool 30. The power tool 30 is a handheld cordless grinder that is designed for grinding applications, such as dry-grinding, fine-grinding, and polishing, of mineral materials.

The grinder 30 comprises a motor housing **32** with an electric motor (not shown), a battery pack **33,** and a guard **34.** The cup wheel 31 is surrounded by the guard 34, which serves to protect the operator from flying dust particles and reduces the risk of injury posed by the operator reaching into the rotating cup wheel 31. For operating the grinder 30 securely, the grinder 30 must be hold with both hands on a grip **35** and a gripping surface **36.** The grinder 10 is provided to be used in combination with a dust extractor.

FIG. 2A shows the grinder 30 with the cup wheel 31 connected to the power tool, and FIG. 2B shows in detail how the cup wheel 31 can be connected to the grinder 30. The cup wheel disk 31 is connected to a drive spindle **37** of the grinder 30 via a clamping flange **38** and a clamping nut **39.** The clamping flange 38 is positioned flush and centered and the clamping nut 39 is installed keyless.

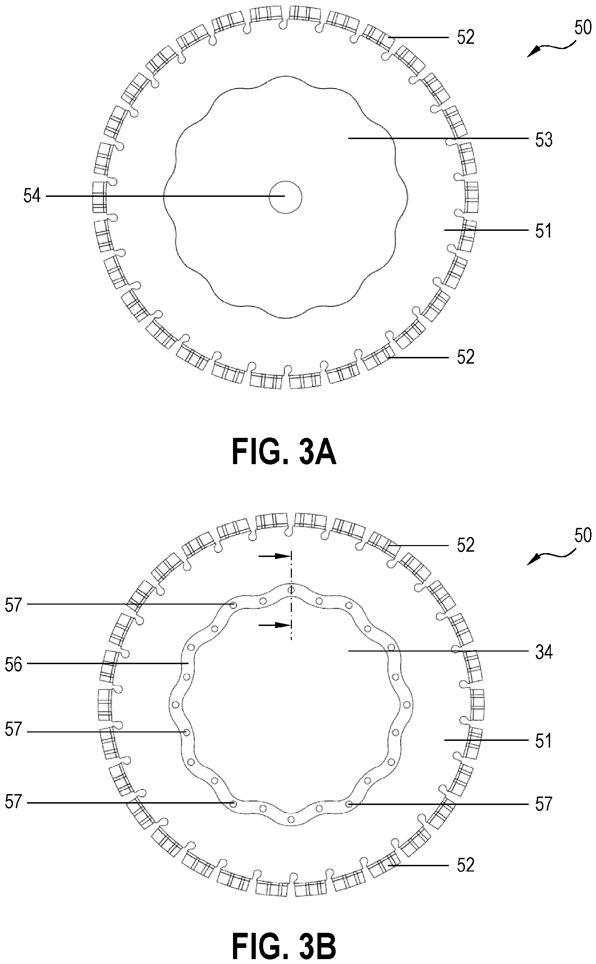

**FIGS. 3A****, B** show a first embodiment of a tool insert **50** according to the present invention configured to be connected to a power tool, such as the cut-off saw 10 shown in FIGS. 1A, B. The tool insert 50 is provided for cutting applications and can substitute the tool insert 11 of the cut-off saw 10.

The tool insert 50 comprises a metal ring **51,** a plurality of cutting elements **52** connected to the metal ring 51, and an inner structure **53** including an arbor hole **54.** FIG. 3A shows the tool insert 50 with the inner structure 53, and FIG. 3B shows the tool insert 50 without the inner structure 53. The inner structure 53 is made from a plastic material and connected to the metal ring 51.

The inner structure 53 can be made of any type of plastic material. Due to their well-known properties, plastic materials formed as polyamides (PA), particularly formed as fiber-reinforced polyamides, are preferred to be used as the inner structure 53. Polyamides have high strength and stiffness, excellent impact resistance and good abrasion and wear resistance.

The metal ring 51 is encased by a border strip **56.** The border strip 56 includes a plurality of interlocking elements **57.** In the exemplary version of FIG. 3B, the interlocking elements are formed as clearance holes 57 which allow a strong connection between the inner structure 53 and the metal ring 51. The form of the clearance holes 57 and pattern of the clearance holes 57 can be adapted to the application of the tool insert 50 and the specific requirements.

In the exemplary version of FIG. 3B, the clearance holes 57 comprise a generally circular form. The clearance holes 57 does not need to be generally circular, they may be elliptical, hexagonal, or have any other form. The size and form of the clearance holes 57 is selected such that the plastic material can flow properly through the clearance holes. The number of the clearance holes 57 is adapted to the required strength of the tool insert 50. In order to achieve a smooth connection of the inner structure 53 to the metal disk 51, the clearance holes 57 can be uniformly distributed over the border strip 56.

The metal ring 51 has a ring-shaped form including an outer circumference, an inner circumference, a first end face, and a second end face. In the exemplary version of FIG. 3, the metal ring 51 comprises a generally circular outer circumference and the plurality of cutting elements 52 is arranged peripherally around the outer circumference. The metal ring 51 does not need to be generally circular, it may be hexagonal, octagonal, decagonal, or indeed have any number of circumferentially extending sides. The metal ring 51 is typically made from steel, but any type of metal or any combination of metals can be used.

In the exemplary version of FIG. 3, the cutting elements 52 are formed as cutting segments composed of a sintered matrix material and a plurality of abrasive particles and are equi-angularly spaced around the outer circumference of the metal ring 51. The cutting segments 52 are connected to the metal ring 51 by welding or brazing; alternatively, the cutting segments may be connected to the metal ring in a releasable manner, such as screwing. Instead of cutting segments including abrasive particles, cutting elements including PCD (polycrystalline diamond) cutters or a cutting ring can be used and connected to the metal ring 51.

In the exemplary version of FIG. 3, the arbor hole 54 comprises a generally circular form. The arbor hole 54 does not need to be generally circular, it may be hexagonal, octagonal, decagonal, or indeed have any number of circumferentially extending sides. The arbor hole 54 is configured to be connected to the power tool, such as the cut-off-saw 10, and the form of the arbor hole 54 is adapted to a spindle of the power tool 10. The arbor hole 54 is arranged in the inner structure 53 and, in the connected state of the cutting disk 50, the arbor hole 54 made of plastic is in contact with a drive spindle of a power tool, which is usually made from steel.

The concept of the (hybrid) tool insert for cutting applications according to the present invention can be used in combination with any metal ring 51, any arbor hole 54, any type of cutting element 52, and any type of connection between the cutting element 52 and the metal ring 51.

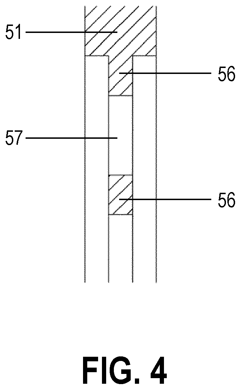

**FIG. 4** shows in detail the tool insert 50 of FIG. 3B in a cross-section. The metal ring 51 is encased by the border strip 36 that is formed as a recess with a reduced thickness compared to the thickness of the metal ring 51. The reduced thickness of the border strip 56 is necessary to allow that the inner aperture 34 can be filled with the plastic material without any protrusion with respect to the metal ring 51.

The border strip 56 includes the plurality of interlocking elements 57 that are formed as clearance holes. The size and form of the clearance hole 57 is selected such that the plastic material can flow properly through the clearance hole 57. The clearance hole 57 allows a strong connection between the inner structure 53 and the metal ring 51.

The connection of the inner structure 53 and the metal ring 51 can be made of any type of plastic material. Due to their properties, plastic materials formed as polyamides (PA), particularly formed as fiber-reinforced polyamides, are preferred to be used. Polyamides have high strength and stiffness, excellent impact resistance and good abrasion and wear resistance. By reinforcing polyamides with fibers, properties of the polyamides, such as strength, elastic modulus, and continuous operating temperature, can increase.

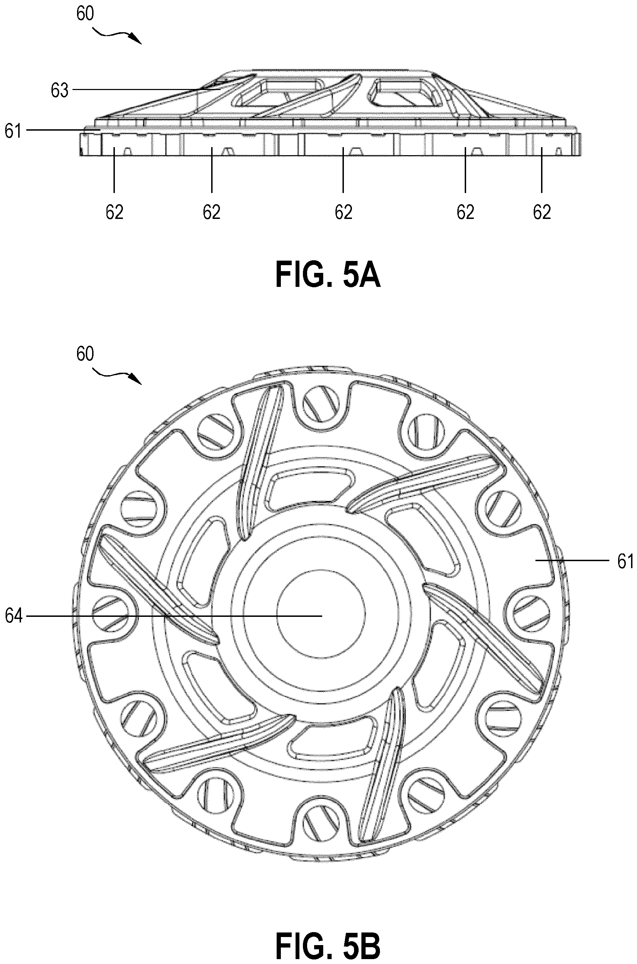

**FIGS. 5A****, B** show a second embodiment of a tool insert **60** according to the present invention configured to be connected to a power tool, such as the grinder 30 shown in FIGS. 2A, B. The tool insert 60 is provided for grinding applications and can substitute the tool insert 31 of the grinder 30.

The tool insert 60 comprises a metal ring **61,** a plurality of grinding elements **62** connected to the metal ring 61, and an inner structure **63** including an arbor hole **64** configured to be connected to the drive spindle 37 of the power tool 30. FIG. 5A shows the tool insert 60 in a side view, and FIG. 5B shows the tool insert 60 in a top view.

In the exemplary version of FIG. 5, the inner structure 63 is formed as cup-shaped plastic part including a number of ribs. The inner structure 63 does not need to be cup-shaped, it may be disc-shaped, or have any other appropriate shape. The form of the inner structure 63, such as the number and/or form of ribs, the number and/or form of cooling holes, can be adapted to the application of the tool insert 60 and the specific requirements.

The inner structure 63 can be made of any type of plastic material. Due to their well-known properties, plastic materials formed as polyamides (PA), particularly formed as fiber-reinforced polyamides, are preferred to be used as the inner structure 63. Polyamides have high strength and stiffness, excellent impact resistance and good abrasion and wear resistance.

The metal ring 61 has a ring-shaped form including an outer circumference, an inner circumference, a first end face, and a second end face. In the exemplary version of FIG. 5, the metal ring 61 comprises a generally circular outer circumference and the plurality of grinding elements 52 is arranged peripherally around the outer circumference. The metal ring 61 does not need to be generally circular, it may be hexagonal, octagonal, decagonal, or indeed have any number of circumferentially extending sides. The metal ring 61 is typically made from steel, but any type of metal or any combination of metals can be used.

In the exemplary version of FIG. 5, the grinding elements 62 are formed as grinding segments composed of a sintered matrix material and a plurality of abrasive particles and are equi-angularly spaced around the outer circumference of the metal ring 61. The grinding segments 62 are connected to the metal ring 61 by welding or brazing; alternatively, the grinding segments may be connected to the metal ring 61 in a releasable manner, such as screwing. Instead of grinding segments including abrasive particles, any type of grinding elements can be used and connected to the metal ring 61.

In the exemplary version of FIG. 5, the arbor hole 64 comprises a generally circular form. The arbor hole 64 does not need to be generally circular, it may be hexagonal, octagonal, decagonal, or indeed have any number of circumferentially extending sides. The arbor hole 64 is configured to be connected to the power tool, such as the grinder 30, and the form of the arbor hole 64 is adapted to the drive spindle 37 of the power tool 30. The arbor hole 64 is arranged in the inner structure 63 and, in the connected state of the tool insert 60, the arbor hole 64 made of plastic is in contact with a drive spindle of a power tool, which is usually made from steel.

The concept of the (hybrid) tool insert according to the present invention can be used in combination with any metal ring 61, any arbor hole 64, any type of grinding element 62, and any type of connection between the grinding element 62 and the metal ring 61.

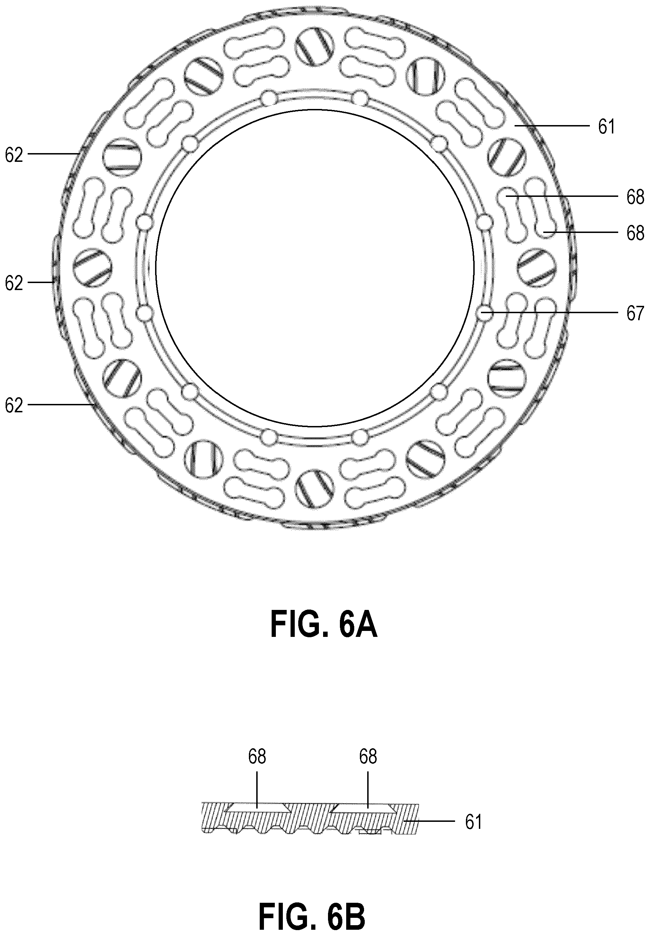

**FIGS. 6A****, B** show the metal ring 61 and the grinding elements 62 of the tool insert 60. The metal ring 61 has a ring-shaped form including an outer circumference, an inner circumference, a first end face, and a second end face.

In order to connect the inner structure 63 made of plastic material to the metal ring 61, the metal ring 61 includes a plurality of interlocking elements. The interlocking elements include first interlocking elements **67** formed as clearance holes and second interlocking elements **68** formed as blind holes having a reduced thickness compared to the metal ring 61 and having an undercut structure. The form and the pattern of the first interlocking elements 67 and second interlocking elements 68 will be adapted to the application of the tool insert 60 and the specific requirements.

The first interlocking elements 67 have the same thickness as the metal ring 61 and are arranged near the inner circumference of the metal ring 61. Since the grinding elements 62 are arranged at the outer circumference of the metal ring 61, there is no risk of a critical heat impact during plastic working at the inner circumference. The first interlocking elements 67 formed as clearance holes allow a strong connection between the inner structure 63 and the metal ring 61.

The second interlocking elements 68 have a reduced thickness compared to the metal ring 61 and are arranged opposite to the grinding elements 62. In the exemplary version, the second interlocking elements 68 are formed as blind holes to avoid a critical heat impact during plastic working. To allow a good connection between the inner structure 63 and the metal ring 61 via the second interlocking elements 68, the second interlocking elements 68 may have an undercut structure, such as a dovetail (Schwalbenschwanz), and/or a prepared surface. FIG. 6B shows two of the second interlocking elements 68 in detail.

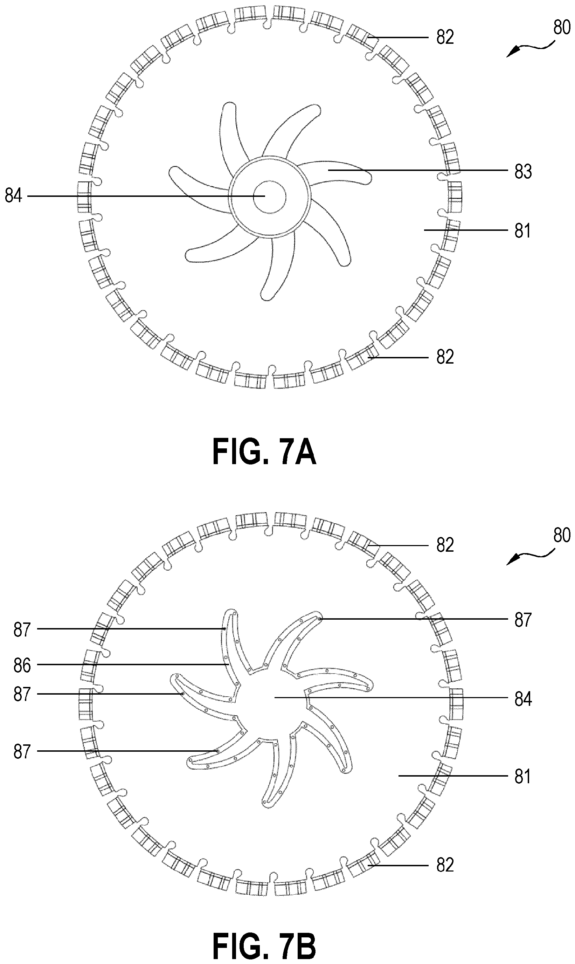

**FIGS. 7A****, B** show a third embodiment of a tool insert **80** according to the present invention configured to be connected to a power tool, such as the cut-off saw 10 shown in FIGS. 1A, B. The tool insert 80 is provided for cutting applications and can substitute the tool insert 11 of the cut-off saw 10.

The tool insert 80 comprises a metal ring **81,** a plurality of cutting elements **82** connected to the metal ring 81, and an inner structure **83** including an arbor hole **84.** FIG. 7A shows the tool insert 80 with the inner structure 83, and FIG. 7B shows the tool insert 80 without the inner structure 83. The inner structure 83 is made from a plastic material and connected to the metal ring 81.

The inner structure 83 can be made of any type of plastic material. Due to their well-known properties, plastic materials formed as polyamides (PA), particularly formed as fiber-reinforced polyamides, are preferred to be used as the inner structure 83. Polyamides have high strength and stiffness, excellent impact resistance and good abrasion and wear resistance.

The metal ring 81 is encased by a border strip **86.** The border strip 86 includes a plurality of interlocking elements **87.** In the exemplary version of FIG. 7B, the interlocking elements are formed as clearance holes 87 which allow a strong connection between the inner structure 83 and the metal ring 81. The form of the clearance holes 87 and pattern of the clearance holes 87 can be adapted to the application of the tool insert 80 and the specific requirements.

The concept of the (hybrid) tool insert for cutting applications according to the present invention can be used in combination with any metal ring 81, any arbor hole 84, any type of cutting element 82, and any type of connection between the cutting element 82 and the metal ring 81.

## Claims

1. A tool insert (50; 60; 80) for cutting or grinding applications configured to be connected to a power tool (10; 30), comprising:
▪ a metal ring (51; 61; 81),
▪ a plurality of cutting or grinding elements (52; 62; 82) connected to the metal ring (51; 61; 81),
▪ an inner structure (53; 63; 83) including an arbor hole (54; 64; 84) configured to be connected to the power tool (10; 30),
**characterized in that** the inner structure (53; 63; 83) is made from a plastic material and the metal ring (51; 61; 81) is connected to the inner structure (53; 63; 83).

2. The tool insert of claim 1, wherein the metal ring (51; 61; 81) includes one or more interlocking elements (57; 67, 68; 87).

3. The tool insert of any one of claims 1 to 2, wherein the metal ring (51; 61; 81) includes a border strip (56; 86) having a thickness smaller than the thickness of the metal ring (51; 81).

4. The tool insert of claim 3, wherein the border strip (56; 86) includes one or more interlocking elements (57; 87).

5. The tool insert of claim 2, wherein the interlocking elements (57; 67, 68; 87) include first interlocking elements formed as clearance holes (57; 67; 87) and/or second interlocking elements formed as blind holes (68).

6. The tool insert of any one of claims 1 to 5, wherein the inner structure (53; 63; 83) is made from polyamides.

7. The tool insert of claim 6, wherein the inner structure (53; 63; 83) is made from fiber-reinforced polyamides.

8. The tool insert of any one of claims 1 to 7, wherein the inner structure (53; 63; 83) is connected to the metal ring (51; 61; 81) via over-molding or potting.
